# EUROPEAN PATENT SPECIFICATION

(11) **EP 3 584 768 B1**
(45) Date of publication and mention of the grant of the patent: **21.06.2023**
(21) Application number: 18754577.7
(22) Date of filing: 06.02.2018
(51) Int. Cl.: G07C 5/08

(54) **METHOD OF DETECTING PHOTOGRAPHIC DIRECTION SHIFT, DEVICE, APPARATUS, AND DATA STORAGE MEDIUM**
VERFAHREN ZUR ERKENNUNG DER FOTOGRAFISCHEN RICHTUNGSÄNDERUNG, VORRICHTUNG, EINRICHTUNG UND DATENSPEICHERMEDIUM
PROCÉDÉ DE DÉTECTION DE DÉCALAGE DE DIRECTION PHOTOGRAPHIQUE, DISPOSITIF, APPAREIL ET SUPPORT DE STOCKAGE DE DONNÉES

(30) Priority: 16.02.2017 CN 201710084422
(43) Date of publication of application: 25.12.2019
(73) Proprietor: Tencent Technology (Shenzhen) Company Limited, Shenzhen, Guangdong 518057 (CN)
(72) Inventor: WANG, Dafeng, Shenzhen, Guangdong 518057, (CN); CHEN, Jianye, Shenzhen, Guangdong 518057, (CN)
(74) Representative: Eisenführ Speiser
(86) International application number: PCT/CN2018/075383
(87) International publication number: WO 2018/149323

(56) References cited:
- EP-A1- 2 080 983
- EP-B1- 2 080 983
- CN-A- 103 606 209
- CN-A- 104 537 729
- CN-A- 105 894 607
- CN-A- 106 060 392
- CN-U- 204 680 071
- JP-A- 2010 154 304
- US-A1- 2013 174 660
- US-A1- 2015 226 621

## Description

This application claims priority to Chinese Patent Application No. 201710084422.5, titled "PHOTOGRAPHING DIRECTION DEVIATION DETECTION METHOD AND APPARATUS" filed with the Chinese Patent Office on February 16, 2017.

### FIELD OF THE TECHNOLOGY

This application relates to the technical field of computers, and in particular to a photographing direction deviation detection method, apparatus, device, and a storage medium.

### BACKGROUND OF THE DISCLOSURE

With continuous improvement of awareness of people on traffic security, image capturing devices (for example, a driving recorder) fixedly arranged in vehicles, such as automobiles, are increasingly widely applied.

In the related technology, when mounting an image capturing device in a vehicle, a user may set a photographing direction of the image capturing device according to an actual requirement. Due to uncontrollable cases, such as jolting or bumping, during movement of the vehicle, the photographing direction of the image capturing device may deviate, resulting in a blind spot of monitoring in an image captured by the image capturing device and affecting a capturing effect of the image capturing device. Therefore, currently, a user needs to periodically manually detect whether the photographing direction of the image capturing device mounted in the vehicle deviates.

During an actual application, because the user may not pay attention to the photographing direction of the driving recorder all the time, the user may not perceive deviation of the photographing direction in time. In addition, accuracy of manually checking whether the photographing direction of the driving recorder deviates by the user is relatively low.

US 2013/0174660 A1 discloses a terminal holding device that includes an attaching unit to be attached to a vehicle, a holding unit which removably holds a terminal device in such a manner that a display unit of the terminal device is exposed and which includes a contact surface to be contact with the terminal device, an acceleration sensor which detects acceleration in a direction from a side of the contact surface to a side opposite to the contact surface, and a supplying unit which supplies a detection signal of the acceleration sensor to the terminal device.

### SUMMARY

To resolve problems in the related technology that a user may not perceive deviation of a photographing direction of a driving recorder in time, and that it is inaccurate to manually check whether a photographing direction of the driving recorder deviates, a photographing direction deviation detection method, apparatus, device, and a storage medium are provided according to embodiments of the present disclosure. Technical solutions are as follows.

According to one aspect, a photographing direction deviation detection method according to claim 1 is provided

According to another aspect, a deviation detection device according to claim 9 is provided. The deviation detection device includes a processor and a memory. The memory stores an instruction, and the instruction is executed by the processor to implement the foregoing photographing direction deviation detection method.

According to another aspect, a computer readable storage medium according to claim 10 is provided. The storage medium stores an instruction, and the instruction is executed by a processor in a deviation detection device to implement the foregoing photographing direction deviation detection method.

The technical solutions provided in this application include the following beneficial effects.

During a moving process of the image capturing device, the target photographing direction of the image capturing device can be estimated by obtaining only the horizontal acceleration of the image capturing device at each time instant, and it is determined whether the actual photographing direction of the image capturing device deviates based on the target photographing direction. In this way, it is unnecessary to manually check the photographing direction of the image capturing device by a user, thereby improving timeliness and accuracy of detecting whether the photographing direction of the image capturing device deviates.

It should be understood that, the foregoing general descriptions and the following detailed descriptions are merely for illustration and explanation and are not intended to limit this application.

### BRIEF DESCRIPTION OF THE DRAWINGS

The accompanying drawings, which are incorporated in the specification and constitute a part of the specification, illustrate embodiments of the present disclosure and, together with the specification, serve to explain the principles of this application.
FIG. 1 is a schematic diagram of an application scenario according to this application.
FIG.2 is a flowchart of a photographing direction deviation detection method according to an exemplary embodiment.
FIG.3 is a schematic diagram of a direction of a horizontal acceleration and a direction of a moving speed according to the embodiment shown by FIG.2.
FIG.4 is a schematic diagram of a direction angle in a solution according to the embodiment shown by FIG. 2.
FIG. 5 is a schematic flowchart of the solution according to the embodiment shown by FIG. 2.
FIG.6 is a flowchart of a photographing direction deviation detection method according to an exemplary embodiment.
FIG. 7 is a structural block diagram of a photographing direction deviation detection apparatus according to an exemplary embodiment.
FIG.8 is a schematic structural diagram of a device according to an exemplary embodiment.

### DESCRIPTION OF EMBODIMENTS

Exemplary embodiments are described in detail herein, and examples of the exemplary embodiments are shown in the accompanying drawings. When the following descriptions relate to the accompanying drawings, unless indicated otherwise, same numbers in different accompanying drawings represent same or similar elements. The implementations described in the following exemplary embodiments do not represent all implementations consistent with this application. On the contrary, the implementations are merely examples of apparatuses and methods that are described in detail in the appended claims and that are consistent with some aspects of this application.

The solutions in the embodiments of the present disclosure may be applied to a deviation detection device. A movable image capturing device corresponding to the deviation detection device may be fixedly mounted in a vehicle. For example, the image capturing device may be an image capturing assembly (for example, a camera assembly) mounted in a driving recorder of an automobile, and the deviation detection device may be a computing assembly in the driving recorder. Alternatively, the deviation detection device may be a computer device (for example, a vehicle-mounted computer, or a smartphone) connected to the driving recorder in a wired or wireless manner.

In the solutions in the embodiments of the present disclosure, during a moving process of the image capturing device, the deviation detection device obtains a horizontal acceleration of the image capturing device at each of multiple time instants in a pre-determined time period, determines a target photographing direction of the image capturing device based on the horizontal acceleration at each of the time instants, and determines, in a case that a direction angle satisfies a preset condition, whether an actual photographing direction of the image capturing device deviates. The direction angle indicates an angle between the target photographing direction and the actual photographing direction of the image capturing device at an end time instant of the pre-determined time period.

The target photographing direction may be a desired photographing direction of the image capturing device preset by a user. When mounting the image capturing device in the vehicle, a user usually sets the target photographing direction of the image capturing device to be a fixed direction corresponding to an attitude of the vehicle. For example, the user may set the target photographing direction to be a straight-forward direction of the vehicle, or to be a direction deviating leftward or rightward relative to the straight-forward direction of the vehicle by a pre-determined angle, or the like. During an actual application, the vehicle moves in the straight-forward direction of the vehicle in most cases, the target photographing direction of the image capturing device is the fixed direction corresponding to the attitude of the vehicle, and the image capturing device moves as the vehicle moves. Therefore, an attitude parameter of the vehicle (for example, the straight-forward direction of the vehicle) can be estimated by obtaining only an acceleration of the image capturing device at each time instant during the movement. The target photographing direction of the image capturing device is determined in conjunction with the estimated attitude parameter of the vehicle. Then, it can be determined whether the actual photographing direction of the image capturing device deviates based on an angle between the actual photographing direction of the image capturing device and the estimated target photographing direction.

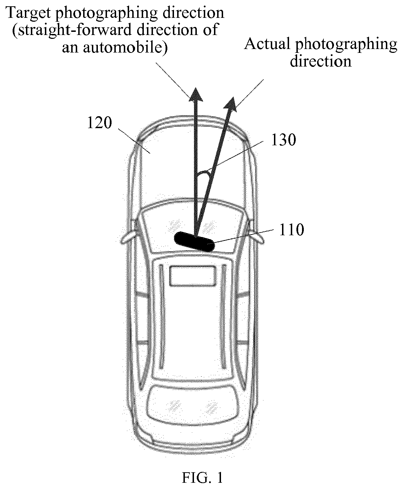

Reference is made to FIG. 1 which is a schematic diagram of an application scenario according to this application. It is assumed that the image capturing device is a camera assembly in a driving recorder 110, and the vehicle is an automobile 120. In one aspect, a straight-forward direction of the automobile 120 is fixed relative to a target photographing direction of the camera assembly in the driving recorder 110. For example, as shown in FIG. 1, the target photographing direction may be the straight-forward direction of the automobile 120 (during an actual application, the target photographing direction may alternatively form a preset angle with the straight-forward direction of the automobile 120). In another aspect, during traveling, the automobile 120 moves in the straight-forward direction for most of the time, rarely turns or reverses, and the driving recorder 110 is fixedly arranged in the automobile 120. Based on this feature, the straight-forward direction of the automobile 120 may be determined based on a moving state of the driving recorder 110, and the moving state of the driving recorder 110 may be obtained by monitoring an acceleration of the driving recorder 110. With reference to the foregoing two aspects, during a moving process of the automobile 120, a direction angle 130 between the target photographing direction of the camera assembly in the driving recorder 120 (that is, the straight-forward direction of the automobile 120) during a specified time period and an actual photographing direction of the camera assembly in the driving recorder 120 at an end time instant of the specified time period can be estimated by obtaining only accelerations of the driving recorder 120 in the time period, and then it can be determined whether the actual photographing direction of the driving recorder 110 deviates based on the direction angle 130.

In the solutions in the embodiments of the present disclosure, during the moving process of the image capturing device, the deviation detection device can estimate the target photographing direction of the image capturing device by obtaining only the horizontal acceleration of the image capturing device at each time instant, and determine, based on the target photographing direction, whether the actual photographing direction of the image capturing device deviates. In this way, it is unnecessary to manually check the photographing direction of the image capturing device by the user, thereby improving timeliness and accuracy of detecting whether the photographing direction of the image capturing device deviates.

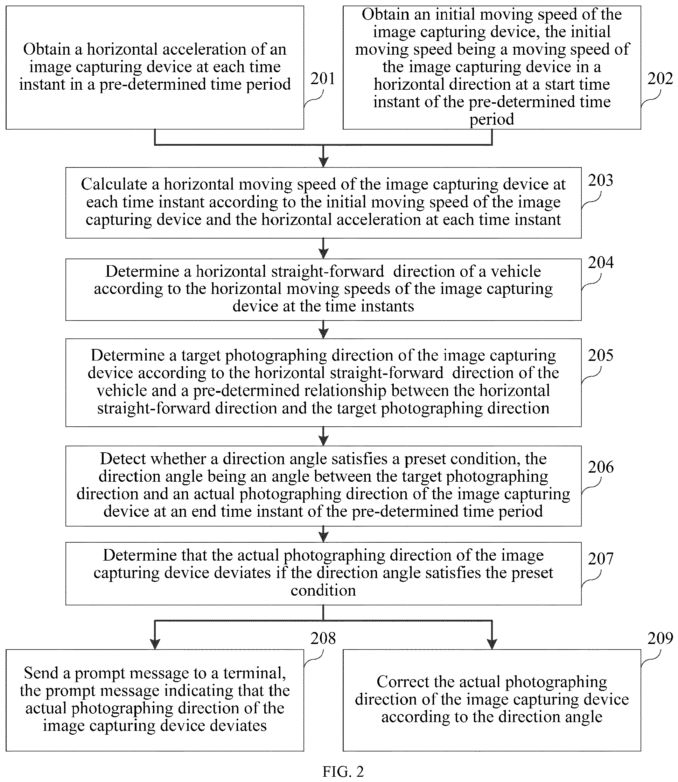

FIG.2 is a flowchart of a photographing direction deviation detection method according to an exemplary embodiment. The method may be applied to a deviation detection device. The deviation detection device corresponds to an image capturing device fixedly mounted in a vehicle. The photographing direction deviation detection method may include the following steps 201 to 209.

In step 201, a horizontal acceleration of an image capturing device at each of multiple time instants in a pre-determined time period is obtained.

In the solution shown in the embodiment of the present disclosure, the horizontal acceleration and a moving speed described hereinafter (including an initial moving speed and a horizontal moving speed) are vectors including a value and a direction. That is, the horizontal acceleration includes an acceleration value and an acceleration direction, and the moving speed includes a speed value and a moving direction.

Both the directions of the horizontal acceleration and the moving speed are directions relative to the image capturing device. The direction of the horizontal acceleration or the moving speed may be a direction relative to a horizontal straight-forward direction of the image capturing device. For example, the direction of the horizontal acceleration or the moving speed may deviate leftward or rightward from the horizontal straight-forward direction of the image capturing device by a certain angle.

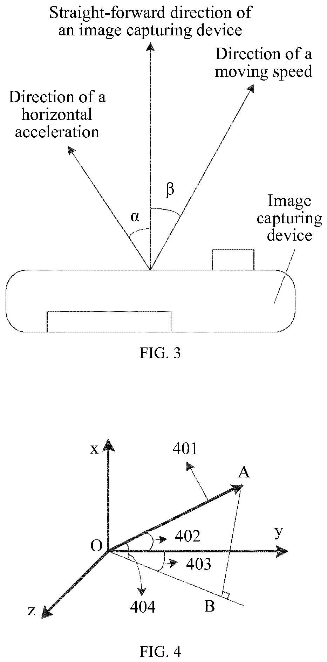

Reference is made to FIG.3 which is a schematic diagram of a direction of a horizontal acceleration and a direction of a moving speed according to an embodiment of the present disclosure. The directions of the horizontal acceleration and the moving speed may deviate relative to the straight-forward direction of the image capturing device by a certain angle. For example, in FIG.3, the direction of the horizontal acceleration may deviate leftward from the straight-forward direction of the image capturing device by an angle α. Similarly, in FIG.3, the direction of the moving speed may deviate rightward from the straight-forward direction of the image capturing device by an angle β.

Optionally, the solution in the embodiment of the present disclosure may be performed by the deviation detection device. For example, the deviation detection device may obtain sensor data of an acceleration sensor (G-Sensor) arranged relative to the image capturing device, and obtain the horizontal acceleration of the image capturing device at each time instant in the pre-determined time period based on the sensor data.

The acceleration sensor may be a sensor arranged inside the image capturing device. Alternatively, the acceleration sensor may be arranged outside the image capturing device. In addition, a position of the acceleration sensor relative to the image capturing device is fixed. For example, in a case that the image capturing device is fixedly arranged in the vehicle, the acceleration sensor may also be an acceleration sensor built in the vehicle.

The pre-determined time period may include all or a part of time in a moving process of the image capturing device from a start time instant to an end time instant.

Optionally, during an actual application, when moving along a straight or an approximate straight path, the vehicle moves in a straight-forward direction of the vehicle with a great probability. In other words, a moving direction in this case is the closest to the straight-forward direction of the vehicle. In the embodiment of the present disclosure, to improve accuracy of subsequently determining the horizontal straight-forward direction of the vehicle, the deviation detection device may determine a time period during which the image capturing device moves along a straight or approximate straight line as the pre-determined time period, when obtaining the horizontal acceleration of the image capturing device at each time instant in the pre-determined time period.

For example, it is assumed that the image capturing device is an image capturing assembly in a driving recorder, and the deviation detection device is a computing assembly in the driving recorder. The driving recorder includes an acceleration sensor and a processor (that is, the computing assembly). After the driving recorder is powered on, the processor continuously obtains sensor parameters obtained by the acceleration sensor through measurement (where the acceleration sensor may be connected to the processor through a bus in the driving recorder), and obtains an acceleration of the driving recorder at each time instant based on the obtained sensor parameters. The processor in the driving recorder can determine, based on the obtained acceleration, a moving state of a vehicle (that is, whether the vehicle is moving, whether the vehicle moves along a straight line, or the like). When it is required to detect whether a photographing direction of the driving recorder deviates, the processor in the driving recorder may determine, based on the moving state of the vehicle, a time period during which the driving recorder moves along a straight line or an approximate straight line in a moving process of the driving recorder as the pre-determined time period, and obtain a horizontal acceleration at each time instant in the pre-determined time period.

Optionally, the deviation detection device may receive the sensor parameters of the acceleration sensor at a certain time interval. For example, the deviation detection device may receive the sensor parameters every 0.1 ms. Accordingly, when obtaining the horizontal acceleration at each time instant in the pre-determined time period, the deviation detection device may determine a time instant in a time period when a sensor parameter is received as a time instant in the pre-determined time period, and obtains the horizontal acceleration at each time instant based on the sensor parameter received at each time instant.

In step 202, an initial moving speed of the image capturing device is obtained. The initial moving speed indicates a moving speed of the image capturing device in a horizontal direction at a start time instant of the pre-determined time period.

In the embodiment of the present disclosure, the deviation detection device may continuously obtain horizontal accelerations of the image capturing device, and calculate, from a time instant when the speed of the image capturing device is 0, moving speeds of the image capturing device in the horizontal direction at all time instants in conjunction with the horizontal accelerations of the image capturing device. The deviation detection device may obtain a horizontal moving speed at a time instant which is closest to a start time instant of the pre-determined time period, as the initial moving speed.

Because the deviation detection device receives the sensor parameters and determines the horizontal accelerations at a certain time interval, in the embodiment of the present disclosure, the deviation detection device may consider, by default, that a horizontal acceleration of the image capturing device remains unchanged in a time period between two time instants when a previous horizontal acceleration and a next horizontal acceleration are respectively determined, and the horizontal acceleration is equal to the next horizontal acceleration. If the deviation detection device knows a horizontal moving speed vi at the time instant when the previous horizontal acceleration is determined, the deviation detection device can determine a horizontal moving speed v₂ of the image capturing device at the time instant when the next horizontal acceleration is determined, based on the determined next horizontal acceleration a and a time interval Δt between the two time instants in conjunction with a calculation formula between an acceleration and a speed.

It is assumed that a time interval between two adjacent time instants when the deviation detection device receives sensor data is 0.1 ms. A horizontal moving speed of the image capturing device is 0 and a horizontal acceleration is also 0 at a time instant 0 ms. At a time instant 0.1 ms, the deviation detection device receives sensor data, determines the horizontal acceleration at the time instant 0.1 ms, and calculates a horizontal moving speed at the time instant 0.1 ms based on the horizontal moving speed at the time instant 0 ms, the horizontal acceleration at the time instant 0.1 ms and the time interval (that is, 0.1 ms). At a time instant 0.2 ms, the deviation detection device receives sensor data, determines a horizontal acceleration at the time instant 0.2 ms, and calculates a horizontal moving speed at the time instant 0.2 ms based on the horizontal moving speed at the time instant 0.1 ms, the horizontal acceleration at the time instant 0.2 ms and the time interval; and so on, the deviation detection device calculates a horizontal moving speed every 0.1 ms.

In step 203, a horizontal moving speed of the image capturing device at each time instant is calculated based on the initial moving speed of the image capturing device and the horizontal acceleration at each time instant in the preset time period.

In this step, the deviation detection device receives a sensor parameter at each time instant in the preset time period. In addition, the deviation detection device calculates the horizontal moving speed at each time instant based on the initial moving speed and the horizontal acceleration at each time instant in the pre-determined time period, with a manner same as the manner in which the deviation detection device calculates the moving speed in the horizontal direction at each time instant in step 202, and details are not described herein again.

In step 204, a horizontal straight-forward direction of the vehicle is determined based on the horizontal moving speeds of the image capturing device at the time instants.

In the embodiment of the present disclosure, because the horizontal moving speed is a vector, the horizontal straight-forward direction of the vehicle may be determined as follows. The deviation detection device may aggregate the horizontal moving speeds of the image capturing device at the time instants, and determine a direction of the aggregated horizontal moving speed as the horizontal straight-forward direction of the vehicle.

The deviation detection device may aggregate the horizontal moving speeds at the time instants as follows. The deviation detection device may sample the horizontal moving speeds at the time instants according to a pre-determined sampling frequency, to obtain horizontal moving speeds at multiple sampling time instants, and perform vector summation on the horizontal moving speeds at the multiple sampling time instants, to obtain an aggregated horizontal moving speed.

During a moving process, the vehicle moves in the straight-forward direction for most of the time and rarely turns or reverses. In other words, directions of most of the horizontal moving speeds at the multiple sampling time instants are the same or close to the horizontal straight-forward direction of the vehicle. In addition, a speed value of the vehicle during movement in the straight-forward direction is usually greater than a speed value during turning or reversing. Therefore, after vector summation is performed on the horizontal moving speeds at the multiple sampling time instants, a direction of the obtained aggregated horizontal moving speed differs a little from the horizontal straight-forward direction of the vehicle in most cases, and the direction of the aggregated horizontal moving speed may be considered as the horizontal straight-forward direction of the vehicle.

It should be noted that, in the embodiment of the present disclosure, step 204 may be performed after horizontal accelerations at all time instants in the pre-determined time period are obtained.

Alternatively, the deviation detection device obtains, from a start time instant of the pre-determined time period, a horizontal acceleration at each time instant based on the initial moving speed. That is, the deviation detection device calculates a horizontal moving speed at the time instant, and corrects the horizontal straight-forward direction of the vehicle based on the calculated horizontal moving speed. At the end of the pre-determined time period, the deviation detection device locks a latest corrected horizontal straight-forward direction of the vehicle, and performs a subsequent step based on the locked horizontal straight-forward direction of the vehicle.

In step 205, a target photographing direction of the image capturing device is determined based on the horizontal straight-forward direction of the vehicle and a pre-determined relationship between the horizontal straight-forward direction and the target photographing direction.

The pre-determined relationship between the horizontal straight-forward direction and the target photographing direction may be preset by a user. For example, the pre-determined relationship may include an angle between the horizontal straight-forward direction and the target photographing direction. It is assumed that the image capturing device is an image capturing assembly in a driving recorder, and the deviation detection device is a computing assembly in the driving recorder. The driving recorder may provide a pre-determined relationship setting interface, for setting an angle between the target photographing direction of the driving recorder and the straight-forward direction of the vehicle (for example, an automobile) on the setting interface. For example, the user may set the target photographing direction to be the horizontal straight-forward direction of the vehicle (in this case, the angle in the pre-determined relationship is 0). Alternatively, the user may set that an angle is formed between the target photographing direction and the horizontal straight-forward direction of the vehicle. For example, the target photographing direction deviates leftward or rightward from the horizontal straight-forward direction of the vehicle by 5 degrees (in this case, the angle in the pre-determined relationship is 5 degrees leftward or rightward), and the like.

In step 206, it is detected whether a direction angle satisfies a preset condition. The direction angle indicates an angle between the target photographing direction and an actual photographing direction of the image capturing device at an end time instant of the pre-determined time period.

The preset condition includes at least one of the following conditions that: the direction angle is greater than a first preset angle threshold; a component of the direction angle in a horizontal plane is greater than a second preset angle threshold; and a component of the direction angle in a vertical plane is greater than a third preset angle threshold.

The first preset angle threshold, the second preset angle threshold, and the third preset angle threshold may have angle values of the image capturing device preset at delivery, or may have angle values set by the user.

Reference is made to FIG.4 which is a schematic diagram of a direction angle according to an embodiment of the present disclosure. In a spatial coordinate system shown in FIG.4, an origin is a point O, a y axis indicates the target photographing direction, a yOz plane is a horizontal plane, an x axis is perpendicular to the horizontal plane, a direction of a space vector 401 is the actual photographing direction of the image capturing device, an angle 402 between the space vector 401 and the y axis is a direction angle between the target photographing direction and the actual photographing direction of the image capturing device. A vertical line of the yOz plane is drawn from a vertex A of the space vector 401, and the vertical line intersects with the yOz plane at a point B. In this way, an angle 403 between the y axis and a connecting line between the two points O and B is a component of the angle 402 in the horizontal plane, and an angle 404 between the space vector 401 and the connecting line between the two points O and B is a component of the angle 402 in a vertical plane.

During an actual application, the deviation detection device may detect whether a deviation angle of the actual photographing direction relative to the target photographing direction in the three-dimensional space satisfies the preset condition. For example, using FIG.4 as an example, the deviation detection device may detect whether an angle value of the angle 402 is greater than the first preset angle threshold. If the angle value of the angle 402 is greater than the first preset angle threshold, the deviation detection device determines that the direction angle between the target photographing direction and the actual photographing direction satisfies the preset condition.

Alternatively, the deviation detection device may detect whether a deviation angle of the actual photographing direction relative to the target photographing direction in a horizontal direction satisfies the preset condition. For example, using FIG.4 as an example, the deviation detection device may detect whether an angle value of the angle 403 is greater than the second preset angle threshold. If the angle value of the angle 403 is greater than the second preset angle threshold, the deviation detection device determines that the direction angle between the target photographing direction and the actual photographing direction satisfies the preset condition.

Alternatively, the deviation detection device may detect whether a deviation angle of the actual photographing direction relative to the target photographing direction in a vertical direction satisfies the preset condition. For example, using FIG.4 as an example, the deviation detection device may detect whether an angle value of the angle 404 is greater than the third preset angle threshold. If the angle value of the angle 404 is greater than the third preset angle threshold, the deviation detection device determines that the direction angle between the target photographing direction and the actual photographing direction satisfies the preset condition.

Alternatively, the deviation detection device may determine whether the preset condition is satisfied based on any two or three of deviation angles of the actual photographing direction relative to the target photographing direction in a three-dimensional space, in the horizontal direction, or in the vertical direction. That is, in a case that any two or three of the deviation angles are greater than corresponding preset angle thresholds, the deviation detection device determines that the direction angle between the target photographing direction and the actual photographing direction satisfies the preset condition.

In step 207, it is determined that the actual photographing direction of the image capturing device deviates if the direction angle satisfies the preset condition.

After detecting that the direction angle between the target photographing direction and the actual photographing direction is excessively large, the deviation detection device may consider that the actual photographing direction of the image capturing device significantly deviates, and the deviation may affect an image capturing effect. In this case, subsequent step 208 or step 209 may be performed.

In step 208, a prompt message is sent to a terminal. The prompt message indicates that the actual photographing direction of the image capturing device deviates.

In a case that the image capturing device is incapable of adjusting the photographing direction, the deviation detection device may send the prompt message to the terminal of the user. For example, the deviation detection device may send an instant messaging message or a notification message to an instant messaging application installed in the terminal, to indicate that the actual photographing direction of the image capturing device deviates relative to the target photographing direction, so that the user manually corrects the actual photographing direction of the image capturing device in time. Optionally, the prompt message may further include the direction angle between the target photographing direction and the actual photographing direction. Further, the prompt message may further include a suggested direction, angle to-be-adjusted, and the like.

In step 209, the actual photographing direction of the image capturing device is corrected based on the direction angle.

In another possible implementation, if the image capturing device is capable of adjusting the photographing direction, the deviation detection device may adjust the actual photographing direction of the image capturing device based on the direction angle, to adjust the actual photographing direction of the image capturing device to the target photographing direction.

For example, if the image capturing device includes a servo motor configured to adjust an attitude of the image capturing device, the deviation detection device may control an operation of the servo motor based on the direction angle, to adjust the device attitude of the image capturing device, so that the actual photographing direction of the image capturing device is close to or the same as the target photographing direction.

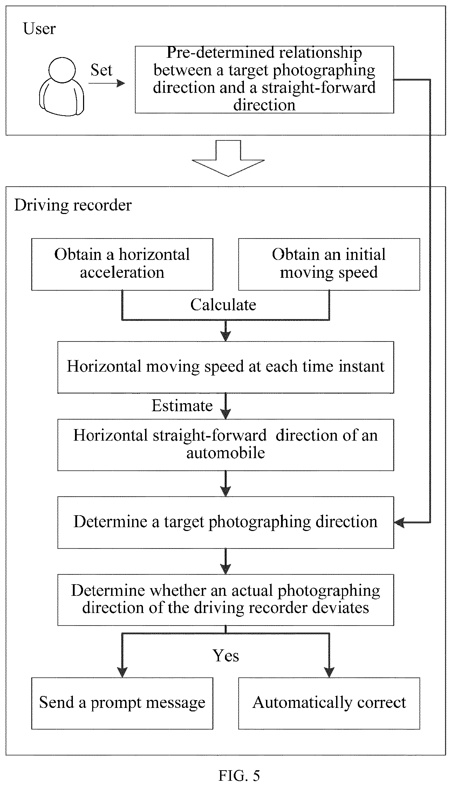

In the above example, the image capturing device is an image capturing assembly in a driving recorder, and the vehicle is an automobile. Reference is made to FIG. 5 which is a schematic flowchart according to an embodiment of the present disclosure. With reference to FIG.5, when a user mounts a driving recorder on the automobile, a pre-determined relationship between a target photographing direction and a straight-forward direction of the automobile may be set in a setting interface provided by the driving recorder (for example, the target photographing direction is set as the straight-forward direction of the automobile). Alternatively, the user may bind the driving recorder with a mobile phone, and set the pre-determined relationship between the target photographing direction and the straight-forward direction on a setting interface presented on a screen of the mobile phone. After the setting is completed, the pre-determined relationship is stored in the driving recorder. After being powered on, the driving recorder may continuously obtain sensor data collected by an acceleration sensor in the driving recorder, obtain a horizontal acceleration of the driving recorder based on the sensor data, and determine a moving state of the driving recorder based on the obtained horizontal acceleration. When the driving recorder moves, a horizontal acceleration at each time instant in a pre-determined time period and an initial moving speed at a start time instant of the pre-determined time period during the movement may be obtained; a horizontal moving speed at each time instant in the pre-determined time period may be calculated based on the horizontal acceleration at each time instant in the pre-determined time period and the initial moving speed at the start time instant of the pre-determined time period; and the straight-forward direction of the automobile may be estimated based on the horizontal moving speeds at the time instants in the pre-determined time period. The target photographing direction of the driving recorder is determined in conjunction with the stored pre-determined relationship, and it is determined whether the actual photographing direction of the driving recorder deviates based on a direction angle between the determined target photographing direction and the actual photographing direction of the driving recorder. If the actual photographing direction of the driving recorder deviates, a prompt message is sent to the mobile phone of the user, to instruct the user to correct the photographing direction in time. Alternatively, the driving recorder may control the built-in servo motor to automatically correct the photographing direction.

Based on the above, in the method according to the embodiment of the present disclosure, in a case that the image capturing device is fixedly arranged in the vehicle, during a movement process of the image capturing device, the deviation detection device can obtain a direction of a horizontal acceleration of the image capturing device at each time instant in a pre-determined time period, and calculate a horizontal moving speed at each time instant in the pre-determined time period based on the direction of the horizontal acceleration and a horizontal moving speed at a start time instant in the pre-determined time period, to further estimate the horizontal straight-forward direction of the vehicle, determine the target photographing direction of the image capturing device based on the estimated horizontal straight-forward direction, and then detect, based on the target photographing direction of the image capturing device, whether the actual photographing direction of the image capturing device deviates. In this way, it is unnecessary to manually check the photographing direction of the image capturing device by the user, thereby improving timeliness and accuracy of detecting whether the photographing direction of the image capturing device deviates.

In addition, after determining whether the actual photographing direction of the image capturing device deviates, the deviation detection device may send a prompt message to the user terminal, to instruct the user to adjust the photographing direction in time. Alternatively, the deviation detection device directly adjusts the photographing direction of the image capturing device, thereby improving the image capturing effect of the image capturing device.

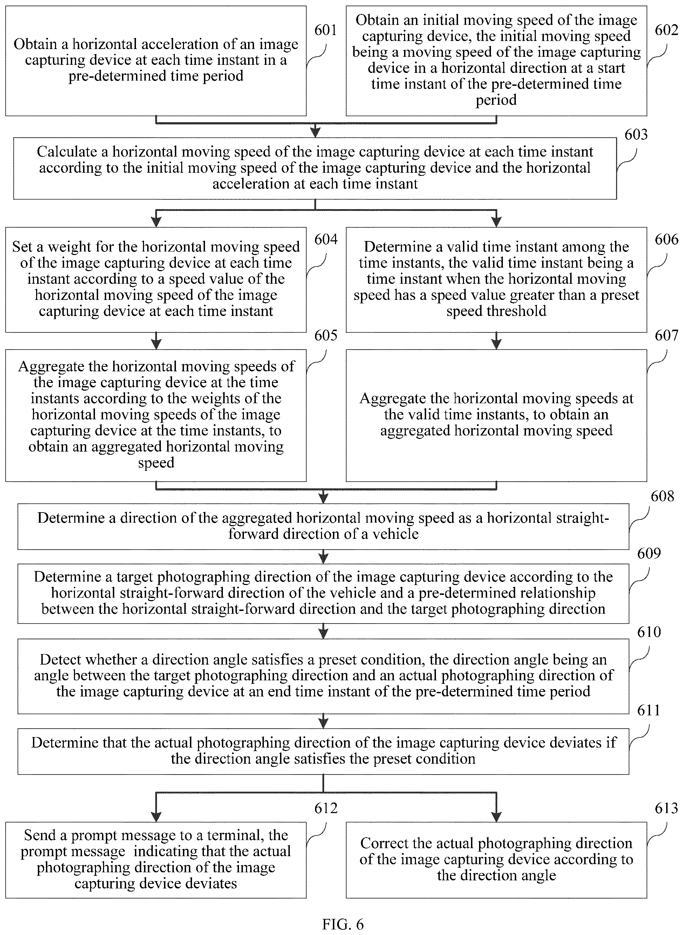

During an actual application, the vehicle usually moves relatively fast when moving in the straight-forward direction or an approximate straight-forward direction, and moves relatively slowly when moving in other directions. Based on this feature, in the solution according to the present disclosure, when determining the horizontal straight-forward direction of the vehicle based on the horizontal moving speeds of the image capturing device at the time instants, the deviation detection device may optimize the process of determining the horizontal straight-forward direction of the vehicle based on the speed values of the horizontal moving speeds of the image capturing device at the time instants, to improve accuracy of the determined horizontal straight-forward direction of the vehicle. For details, one may refer to the following embodiment shown in FIG.6.

FIG.6 is a flowchart of a photographing direction deviation detection method according to an exemplary embodiment. The method may be applied to a deviation detection device. The deviation detection device corresponds to an image capturing device fixedly mounted in a vehicle. The photographing direction deviation detection method may include the following steps 601 to 613.

In step 601, a horizontal acceleration of an image capturing device at each of multiple time instants in a pre-determined time period is obtained.

In step 602, an initial moving speed of the image capturing device is obtained. The initial moving speed indicates a moving speed of the image capturing device in a horizontal direction at a start time instant of the pre-determined time period.

In step 603, a horizontal moving speed of the image capturing device at each time instant in the pre-determined time period is calculated based on the initial moving speed of the image capturing device and the horizontal acceleration of the image capturing device at each time instant.

For a specific implementation process of step 601 to step 603,one may refer to the description of step 601 to step 603 in the embodiment shown by FIG.2, and details are not described herein again.

After calculating the horizontal moving speed of the image capturing device at each time instant, the deviation detection device may aggregate the horizontal moving speeds at the time instants based on speed values of the horizontal moving speeds at the time instants. For a specific aggregation process of the horizontal moving speeds, one may refer to the following step 604 and step 605, or refer to step 606 and step 607.

In step 604, a weight is set for the horizontal moving speed of the image capturing device at each time instant based on a speed value of the horizontal moving speed of the image capturing device at each time instant.

In the embodiment of the present disclosure, the weights are set for the horizontal moving speeds having the different speed values, so that an impact of a horizontal moving speed of the vehicle during turning or reversing on the estimated horizontal straight-forward direction of the vehicle can be weakened, and an impact of a horizontal moving speed during movement of the vehicle in the straight-forward direction on the estimated horizontal straight-forward direction of the vehicle can be enhanced, thereby improving accuracy of the estimated horizontal straight-forward direction of the vehicle. Specifically, a relatively large weight may be set for a horizontal moving speed having a relatively large speed value. Accordingly, a relatively small weight may be set for a horizontal moving speed having a relatively large speed value. The weight may be in positive correlation with the speed value. For example, Table 1 shows a correspondence between weights and speed values of the horizontal moving speed.

**Table 1**

| Speed value v (km/h) of the horizontal speed | Weight |
|---|---|
| 0<v<20 | 0.1 |
| 20≤v≤40 | 1 |
| V>40 | 10 |

As shown in Table 1, for the horizontal moving speed at each time instant in the pre-determined time period, the deviation detection device may set a weight 0.1 for a horizontal moving speed having a speed value ranging from 0 to 20, set a weight 1 for a horizontal moving speed having a speed value ranging from 20 to 40, and set a weight 10 for a horizontal moving speed having a speed value greater than 40.

In step 605, the horizontal moving speeds of the image capturing device at the time instants in the pre-determined time period are aggregated based on the weights of the horizontal moving speeds of the image capturing device at the time instants, to obtain an aggregated horizontal moving speed.

During an actual application, the deviation detection device may multiply the horizontal moving speed at each time instant by a corresponding weight, and perform vector summation on the horizontal moving speeds multiplied by the corresponding weights, to obtain an aggregated horizontal moving speed.

Optionally, to reduce calculation complexity, during an actual application, the deviation detection device may sample the horizontal moving speeds at the time instants according to a pre-determined sampling frequency, to obtain horizontal moving speeds at multiple sampling time instants, multiply the horizontal moving speeds at the multiple sampling time instants respectively by corresponding weights, and then perform vector summation on the obtained products, to obtain an aggregated horizontal moving speed.

In step 604 and step 605, the horizontal moving speed of the vehicle during turning or reversing is weakened, and the horizontal moving speed during movement of the vehicle in the straight-forward direction is enhanced, thereby improving estimation accuracy of the horizontal straight-forward direction of the vehicle. In another possible implementation, a horizontal moving speed during movement of the vehicle in an approximate straight-forward direction may be selected from the horizontal moving speeds at the time instants, and the horizontal straight-forward direction of the vehicle is estimated based on the selected horizontal moving speed. For details, one may refer to step 606 and step 607 in the following.

In step 606, one or more valid time instants among the time instants are determined. The valid time instant indicates a time instant when the horizontal moving speed has a speed value greater than a preset speed threshold.

Because the vehicle usually moves in the straight-forward direction of the vehicle when the speed value of the vehicle is relatively large, in the embodiment of the present disclosure, a time instant when the horizontal moving speed has a speed value greater than a preset speed threshold (for example, 40 km/h) may be selected from the time instants as a valid time instant.

In step 607, the horizontal moving speeds at the valid time instants are aggregated, to obtain an aggregated horizontal moving speed.

The deviation detection device may perform vector summation on the horizontal moving speeds at the valid time instants, to obtain an aggregated horizontal moving speed.

Optionally, in step 607, to reduce calculation complexity, the deviation detection device may sample the horizontal moving speeds at the time instants according to a pre-determined sampling frequency, to obtain horizontal moving speeds at multiple sampling time instants, determine a time instant when the horizontal moving speed has a speed value greater than a preset speed threshold among the multiple sampling time instants as a valid sampling time instant, and perform vector summation on the horizontal moving speeds at the valid sampling time instants, to obtain an aggregated horizontal moving speed.

In step 608, a direction of the aggregated horizontal moving speed is determined as a horizontal straight-forward direction of the vehicle.

After step 605 or step 607 is performed, a direction of the aggregated horizontal moving speed differs a little from the horizontal straight-forward direction of the vehicle in most cases, and the direction of the aggregated horizontal moving speed may be regarded as the horizontal straight-forward direction of the vehicle.

In step 609, a target photographing direction of the image capturing device is determined based on the horizontal straight-forward direction of the vehicle and a pre-determined relationship between the horizontal straight-forward direction and the target photographing direction.

In step 610, it is detected whether a direction angle satisfies a preset condition. The direction angle indicates an angle between the target photographing direction and an actual photographing direction of the image capturing device at an end time instant of the pre-determined time period.

The preset condition includes at least one of the following conditions that: the direction angle is greater than a first preset angle threshold; a component of the direction angle in a horizontal plane is greater than a second preset angle threshold; and a component of the direction angle in a vertical plane is greater than a third preset angle threshold.

In step 611, it is determined that the actual photographing direction of the image capturing device deviates if the direction angle satisfies the preset condition.

In step 612, a prompt message is sent to a terminal. The prompt message indicates that the actual photographing direction of the image capturing device deviates.

For a specific implementation process of step 609 to step 612, one may refer to the description of step 605 to step 608 in the embodiment shown by FIG.2, and details are not described herein again.

In step 613, the actual photographing direction of the image capturing device is corrected based on the direction angle.

For a specific implementation process of step 613, one may refer to the description of step 609 in the embodiment shown by FIG.2, and details are not described herein again.

Optionally, during an actual application, after a user sets the target photographing direction, the user may actively adjusts the actual photographing direction of the image capturing device, rather than modify the target photographing direction by a setting interface. In this case, even if it is indicated that the actual photographing direction of the image capturing device deviates, the user may not adjust the actual photographing direction of the image capturing device. In the embodiment of the present disclosure, when the deviation detection device determines that the actual photographing direction deviates, the user may reset the pre-determined relationship between the horizontal straight-forward direction and the target photographing direction, so that after the pre-determined relationship is reset, the actual photographing direction of the image capturing device is consistent with a new target photographing direction determined based on the reset pre-determined relationship.

The resetting the pre-determined relationship may include resetting a direction angle between the horizontal straight-forward direction and the target photographing direction included in the pre-determined relationship. For example, after the user manually adjusts the actual photographing direction of the image capturing device and the vehicle has traveled for a period of time, the user may send an instruction for resetting the pre-determined relationship, by using a setting interface provided by the user terminal or the deviation detection device. After receiving the instruction for resetting the pre-determined relationship, the deviation detection device may update the direction angle between the horizontal straight-forward direction and the target photographing direction included in the pre-determined relationship, to the direction angle between the horizontal straight-forward direction of the vehicle and the actual photographing direction of the image capturing device calculated in step 608. During subsequent detection, if the actual photographing direction of the image capturing device is not significantly changed, the target photographing direction determined according to the reset pre-determined relationship is consistent with the actual photographing direction of the image capturing device.

Alternatively, in another implementation scenario, after the user terminal receives a prompt message and if the user does not need to adjust an actual photographing angle of the image capturing device and does not expect to frequently receive prompt messages, the user may send the instruction for resetting the pre-determined relationship by using the setting interface provided by the user terminal or the deviation detection device.

It is assumed that the image capturing device is an image capturing assembly in a driving recorder, and the vehicle is an automobile. When mounting a driving recorder in the automobile, the user may set a pre-determined relationship (that is, an angle between the target photographing direction and the horizontal straight-forward direction). After the setting is completed, the driving recorder stores the pre-determined relationship. When the driving recorder moves, a horizontal acceleration at each time instant in a pre-determined time period during the movement may be obtained; a horizontal moving speed at each time instant in the pre-determined time period may be calculated based on the horizontal acceleration at each time instant in the pre-determined time period and a horizontal moving speed at a start time instant of the pre-determined time period; and the straight-forward direction of the automobile may be estimated based on the horizontal moving speeds at the time instants in the pre-determined time period. The target photographing direction of the driving recorder is determined based on the stored pre-determined relationship, and it is determined whether the actual photographing direction of the driving recorder deviates based on a direction angle between the determined target photographing direction and the actual photographing direction of the driving recorder. If the actual photographing direction of the driving recorder deviates, a prompt message is sent to a mobile phone of the user, to instruct the user to correct the actual photographing direction in time. If receiving an instruction for resetting the pre-determined relationship that is sent by the user by using the mobile phone, the driving recorder sets the direction angle between the actual photographing direction of the driving recorder and the estimated straight-forward direction of the automobile as the new pre-determined relationship.

Based on the above, in the method according to the embodiment of the present disclosure, when the image capturing device is fixedly arranged in the vehicle, during movement of the image capturing device, the deviation detection device may obtain a direction of a horizontal acceleration of the image capturing device at each time instant in a pre-determined time period, and calculate a horizontal moving speed at each time instant in the pre-determined time period based on the direction of the horizontal acceleration and a horizontal moving speed at a start time instant of the pre-determined time period, to further estimate the horizontal straight-forward direction of the vehicle, determine the target photographing direction of the image capturing device based on the estimated horizontal straight-forward direction, and then detect, based on the target photographing direction of the image capturing device, whether the actual photographing direction of the image capturing device deviates. In this way, it is unnecessary to manually check the photographing direction of the image capturing device by the user, thereby improving timeliness and accuracy of detecting whether the photographing direction of the image capturing device deviates.

In addition, after determining whether the actual photographing direction of the image capturing device deviates, the deviation detection device may send a prompt message to the user terminal, to instruct the user to adjust the photographing direction in time. Alternatively, the deviation detection device directly adjusts the photographing direction of the image capturing device, thereby improving the image capturing effect of the image capturing device.

In addition, according to the method in the embodiment of the present disclosure, when the horizontal straight-forward direction of the vehicle is determined based on the horizontal moving speeds of the image capturing device at the time instants, the process of determining the horizontal straight-forward direction of the vehicle is optimized based on the speed values of the horizontal moving speeds of the image capturing device at the time instants, to improve accuracy of the determined horizontal straight-forward direction of the vehicle.

In addition, in the method in the embodiment of the present disclosure, after the prompt message is sent to the user and if the user does not adjust the actual photographing direction of the image capturing terminal, but sends the instruction for resetting the re-determined relationship, the deviation detection device updates the pre-determined relationship based on the direction angle between the actual photographing direction and the estimated straight-forward direction of the vehicle. In this way, it is avoided that prompt messages are frequently sent when the user does not adjust the actual photographing direction of the image capturing terminal, thereby reducing interruption on the user and simplifying the operation of resetting the pre-determined relationship by the user.

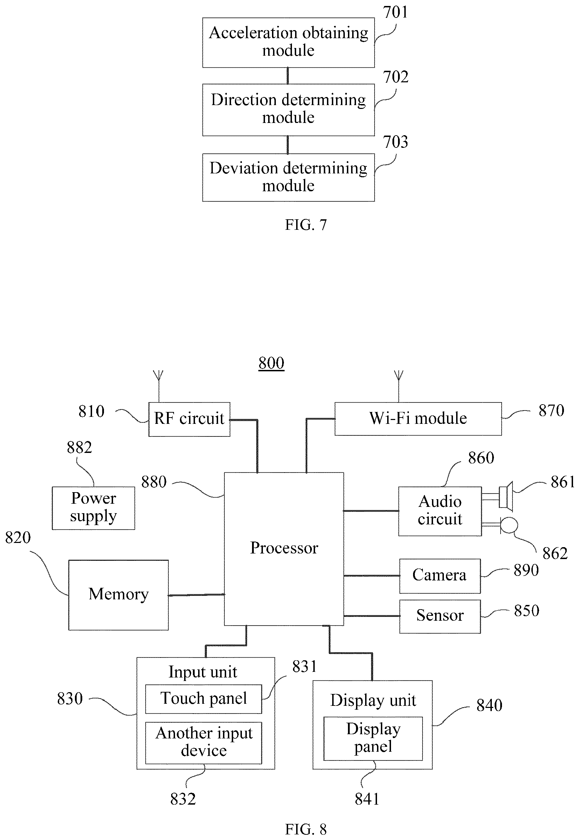

FIG.7 is a structural block diagram of a photographing direction deviation detection apparatus according to an exemplary embodiment. The photographing direction deviation detection apparatus may be used in cooperation with an image detection device arranged in a vehicle, to implement all or some steps of the embodiment shown by FIG.2 or FIG.6. The photographing direction deviation detection apparatus may include: an acceleration obtaining module 701, a direction determining module 702 and a deviation determining module 703.

The acceleration obtaining module 701 is configured to obtain a horizontal acceleration of an image capturing device at each of multiple time instants in a pre-determined time period.

The direction determining module 702 is configured to determine a target photographing direction of the image capturing device based on the horizontal accelerations at each of the time instants.

The deviation determining module 703 is configured to determine, in a case that a direction angle satisfies a preset condition, that an actual photographing direction of the image capturing device deviates. The direction angle indicates an angle between the target photographing direction and the actual photographing direction of the image capturing device at an end time instant of the pre-determined time period.

Optionally, the preset condition includes at least one of the following conditions that:
the direction angle is greater than a first preset angle threshold;
a component of the direction angle in a horizontal plane is greater than a second preset angle threshold; and
a component of the direction angle in a vertical plane is greater than a third preset angle threshold.

Optionally, the image capturing device is fixedly arranged in a vehicle, and the direction determining module includes: a speed obtaining unit, a speed calculating unit, a first direction determining unit and a second direction determining unit.

The speed obtaining unit is configured to obtain an initial moving speed of the image capturing device. The initial moving speed indicates a moving speed of the image capturing device in a horizontal direction at a start time instant of the pre-determined time period.

The speed calculation unit is configured to calculate a horizontal moving speed of the image capturing device at each time instant based on the initial moving speed of the image capturing device and the horizontal acceleration at each time instant.

The first direction determining unit is configured to determine a horizontal straight-forward direction of the vehicle based on the horizontal moving speeds of the image capturing device at the time instants.

The second direction determining unit is configured to determine the target photographing direction based on the horizontal straight-forward direction of the vehicle and a pre-determined relationship between the horizontal straight-forward direction of the vehicle and the target photographing direction.

Optionally, the first direction determining unit includes: a weight setting subunit, a first aggregation subunit and a first determining subunit.

The weight setting subunit is configured to set a weight for the horizontal moving speed of the image capturing device at each time instant based on a speed value of the horizontal moving speed of the image capturing device at each time instant. The weight is in positive correlation with the speed value.

The first aggregation subunit is configured to aggregate the horizontal moving speeds of the image capturing device at the time instants based on the weights of the horizontal moving speeds of the image capturing device at the time instants, to obtain an aggregated horizontal moving speed.

The first determining subunit is configured to determine a direction of the aggregated horizontal moving speed as the horizontal straight-forward direction of the vehicle.

Optionally, the first direction determining unit includes: a second determining subunit, a second aggregation subunit and a third determining subunit.

The second determining subunit is configured to determine one or more valid time instants among the time instants. The valid time instant indicates a time instant when the horizontal moving speed has a speed value greater than a preset speed threshold.

The second aggregation subunit is configured to aggregate the horizontal moving speeds at the valid time instants, to obtain an aggregated horizontal moving speed.

The third determining subunit is configured to determine a direction of the aggregated horizontal moving speed as the horizontal straight-forward direction of the vehicle.

Optionally, the pre-determined relationship includes an angle between the horizontal straight-forward direction and the target photographing direction, and the apparatus further includes:
a relationship update module, configured to update the angle between the horizontal straight-forward direction and the target photographing direction included in the pre-determined relationship to the direction angle on receipt of an instruction for resetting the pre-determined relationship.

Optionally, the apparatus further includes:
a message sending module, configured to send a prompt message to a terminal after it is determined that the actual photographing direction of the image capturing device deviates. The prompt message indicates that the actual photographing direction of the image capturing device deviates.

Optionally, the apparatus further includes:
a correction module, configured to correct the actual photographing direction of the image capturing device based on the direction angle after it is determined that the actual photographing direction of the image capturing device deviates.

Optionally, the deviation detection device is a driving recorder, and the image capturing device is an image capturing assembly in the driving recorder.

FIG.8 is a schematic structural diagram of a device 800 according to an exemplary embodiment. The device 800 in the embodiment of the present disclosure may include one or more components as follows: a processor configured to execute a computer program instruction to perform various processing and methods, a random access memory (RAM) and a read only memory (ROM) that are configured to store information and a program instruction, a memory configured to store data and information, an I/O device, an interface, an antenna, or the like.

The device 800 may include components such as a radio frequency (RF) circuit 810, a memory 820, an input unit 830, a display unit 840, a sensor 850, an audio circuit 860, a Wireless Fidelity (Wi-Fi) module 870, a processor 880, a power supply 882, and a camera 890. A person skilled in the art may understand that the structure of the device shown in FIG.8 does not constitute a limitation to the device, and the device may include more components or fewer components than those shown in the figure, some components may be combined, or the components may be deployed in different manners.

The components of the device 800 are described in detail with reference to FIG.8 hereinafter.

The RF circuit 810 may be configured to receive and send signals during an information receiving and sending process or a call process. Specifically, the RF circuit 810 receives downlink information from a base station, then sends the downlink information to the processor 880 for processing. In addition, the RF circuit 810 sends related uplink data to the base station. Generally, the RF circuit includes but is not limited to, an antenna, at least one amplifier, a transceiver, a coupler, a low noise amplifier (LNA), a duplexer, and the like. In addition, the RF circuit 810 may also communicate with a network and another device by wireless communication. In the wireless communication, any communication standard or protocol may be adopted, which includes but is not limited to, Global System of Mobile communications (GSM), General Packet Radio Service (GPRS), Code Division Multiple Access (CDMA), Wideband Code Division Multiple Access (WCDMA), Long Term Evolution (LTE), e-mail, Short Messaging Service (SMS), and the like.

The memory 820 may be configured to store a software program and module. The processor 880 runs the software program and module stored in the memory 820, to perform various functional applications and data processing of the device 800. The memory 820 may mainly include a program storage area and a data storage area. The program storage area may store an operating system, an application program required by at least one function (such as a sound playing function and an image playing function), and the like. The data storage area may store data (such as audio data and a telephone book) created according to the use of the device 800, and the like. In addition, the memory 820 may include a high-speed random access memory, and may further include a non-volatile memory such as at least one magnetic disk storage device and a flash memory device, or another volatile solid storage device.

The input unit 830 may be configured to receive inputted digit or character information, and generate a key signal input related to the user setting and function control of the device 800. Specifically, the input unit 830 may include a touch panel 831 and another input device 832. The touch panel 831 may also be referred to as a touchscreen, and may collect a touch operation of a user on or near the touch panel (such as an operation of a user on or near the touch panel 831 by using any suitable object or accessory, such as a finger or a stylus), and drive a corresponding connection apparatus according to a preset program. Optionally, the touch panel 831 may include two parts: a touch detection apparatus and a touch controller. The touch detection apparatus detects a touch position of the user, detects a signal generated by the touch operation, and transfers the signal to the touch controller. The touch controller receives the touch information from the touch detection apparatus, converts the touch information into touch point coordinates, and sends the touch point coordinates to the processor 880. In addition, the touch controller can receive a command sent from the processor 880 and execute the command. In addition, the touch panel 831 may be a resistive, capacitive, infrared, or surface acoustic wave type touch panel. In addition to the touch panel 831, the input unit 830 may further include another input device 832. Specifically, the another input device 832 may include but is not limited to one or more of a physical keyboard, a functional key (such as a volume control key or a switch key), a track ball, a mouse, and a joystick.

The display unit 840 may be configured to display information inputted by the user or information provided for the user, and various menus of the device 800. The display unit 840 may include a display panel 841. Optionally, the display panel 841 may be configured by using a liquid crystal display (LCD), an organic light-emitting diode (OLED), or the like. Further, the touch panel 831 may cover the display panel 841. After detecting a touch operation on or near the touch panel 831, the touch panel 831 transfers the touch operation to the processor 880, to determine a type of a touch event. Then, the processor 880 provides a corresponding visual output on the display panel 841 based on the type of the touch event. Although in FIG.8, the touch panel 831 and the display panel 841 are used as two separate components to implement input and output functions of the device 800, in some embodiments, the touch panel 831 and the display panel 841 may be integrated to implement the input and output functions of the device 800.

The device 800 may further include at least one sensor 850, such as a gyro sensor, a magnetic induction sensor, an optical sensor, a motion sensor, and other sensors. Specifically, the optical sensor may include an ambient light sensor and a proximity sensor. The ambient light sensor may adjust luminance of the display panel 841 according to brightness of the ambient light. The proximity sensor may switch off the display panel 841 and/or backlight when the device 800 is moved to the ear. As one type of motion sensor, an acceleration sensor may detect sizes of accelerations in various directions (generally along three axes), may detect a magnitude and a direction of the gravity when being in a static state, and may be configured to identify a device attitude (such as switching between horizontal and vertical screens, a related game, and attitude calibration of a magnetometer), and achieve a related function of vibration identification (such as a pedometer and a knock). Other sensors, such as a barometer, a hygrometer, a thermometer, and an infrared sensor, that may be included in the device 800 are not described herein.

The audio circuit 860, a speaker 881, and a microphone 862 may provide audio interfaces between the user and the device 800. The audio circuit 860 may convert received audio data into an electrical signal and transmit the electrical signal to the speaker 861. The speaker 861 converts the electrical signal into a sound signal for output. On the other hand, the microphone 862 converts a collected sound signal into an electrical signal. The audio circuit 860 receives the electrical signal, converts the electrical signal into audio data, and outputs the audio data to the processor 880 for processing. Then, the processor 880 sends the audio data to, for example, another device via the RF circuit 810, or outputs the audio data to the memory 820 for further processing.

The Wi-Fi is a technology based on a short distance wireless transmission. The device 800 may help, by using the Wi-Fi module 870, the user to receive and send e-mails, browse a web page, access streaming media, and so on, which provides wireless broadband Internet access for the user. Although FIG.8 shows the Wi-Fi module 870, it may be understood that the Wi-Fi module 870 is not an essential component of the device 800, and when required, the Wi-Fi module 870 may be omitted as long as the scope of the essence of the present disclosure is not changed.

The processor 880 is the control center of the device 800, and is connected to various parts of the device by using various interfaces and lines. By running or executing the software program and/or module stored in the memory 820, and invoking data stored in the memory 820, the processor 880 performs various functions and data processing of the device 800, thereby performing overall monitoring on the device. Optionally, the processor 880 may include one or more processing units. Preferably, the processor 880 may be integrated with an application processor and a modulation and demodulation processor. The application processor mainly processes an operating system, a user interface, an application program, and the like. The modulation and demodulation processor mainly processes wireless communication. It may be understood that the foregoing modulation and demodulation processor may not be integrated into the processor 880.

The device 800 further includes the power supply 882 (such as a battery) supplying power to the components. Preferably, the power supply may be logically connected to the processor 880 by using a power supply management system, so as to implement functions such as management of charging, discharging, and power consumption by using the power supply management system.

The camera 890 usually includes a lens, an image sensor, an interface, a digital signal processor, a CPU, a display screen, and the like. The lens is fixed above the image sensor, and the focus can be changed by manually adjusting the lens. The image sensor is equivalent to a "film" of a conventional camera and is a core for the camera to capture an image. The interface is configured to connect the camera to a motherboard of a device by using a flat cable and a board-to-board connector in a spring-type connection manner, and send a captured image to the memory 820. The digital signal processor processes the captured image by performing a mathematical operation, converts a captured analog image into a digital image, and sends the digital image to the memory 820 through the interface.

Although not shown in the figure, the device 800 may further include a Bluetooth module and the like. Details are not described herein.

In addition to the one or more processors 880, the device 800 further includes a memory and one or more modules. The one or more modules are stored in the memory, and are configured to be executed by the one or more processors, to implement all or some steps of the method shown by FIG.2 or FIG.6.

In an exemplary embodiment, a non-transitory computer readable storage medium including an instruction is further provided, for example, a memory including an instruction. The foregoing instruction may be executed by a processor in a deviation detection device to implement the photographing direction deviation detection method according to the embodiments of the present disclosure. For example, the non-transitory computer readable storage medium may be a ROM, a random access memory (RAM), a CD-ROM, a magnetic tape, a floppy disk, an optical data storage device, or the like.

A person skilled in the art can easily figure out another implementation solution of the present disclosure after considering the specification and practicing this application disclosed herein. This application is intended to cover any variation, use, or adaptive change of this application. These variations, uses, or adaptive changes follow the general principles of this application and include common general knowledge or common technical means in the art that are not disclosed in this application. The specification and the embodiments are considered as merely exemplary, and the scope of this application are based on the following claims.

It should be understood that this application is not limited to the precise structures described above and shown in the accompanying drawings, and various modifications and changes can be made without departing from the scope of this application. The scope of this application is defined only by the appended claims.

## Claims

1. A photographing direction deviation detection method, comprising:
obtaining, by a deviation detection device, a horizontal acceleration of an image capturing device at each of a plurality of time instants in a pre-determined time period, the horizontal acceleration being a vector having a value and a direction, and obtaining, by the deviation detection device, an initial moving speed of the image capturing device, the initial moving speed being a vector having a value and a direction,
wherein the initial moving speed indicates a moving speed of the image capturing device in a horizontal direction at a start time instant of the pre-determined time period;
calculating, by the deviation detection device, a horizontal moving speed of the image capturing device at each of the time instants in the pre-determined time period based on the initial moving speed and the horizontal acceleration of the image capturing device at each of the time instants;
setting, by the deviation detection device, a weight for the horizontal moving speed of the image capturing device at each of the time instants in the pre-determined time period, such that the weight is in positive correlation with the value of the horizontal moving speed, and aggregating, by the deviation detection device, the horizontal moving speeds of the image capturing device at the time instants in the pre-determined time period based on the set weights to obtain an aggregated horizontal moving speed;
determining, by the deviation detection device, a horizontal straight-forward direction of a vehicle based on a direction of the aggregated horizontal moving speed;
determining, by the deviation detection device, a target photographing direction of the image capturing device based on the horizontal straight-forward direction of the vehicle and a pre-determined relationship between the horizontal straight-forward direction and the target photographing direction; and
determining, by the deviation detection device in a case that a direction angle satisfies a preset condition, that an actual photographing direction of the image capturing device deviates, wherein the direction angle indicates an angle between the target photographing direction and the actual photographing direction of the image capturing device at an end time instant of the pre-determined time period.

2. The method according to claim 1, wherein the image capturing device is fixedly arranged in a vehicle.

3. The method according to claim 2, wherein the determining, by the deviation detection device, a horizontal straight-forward direction of the vehicle based on the horizontal moving speed of the image capturing device at each of the time instants comprises:
determining, by the deviation detection device, one or more valid time instants among the time instants, wherein the valid time instant indicates a time instant when the horizontal moving speed has a speed value greater than a preset speed threshold;
aggregating, by the deviation detection device, the horizontal moving speeds at the valid time instants, to obtain an aggregated horizontal moving speed; and
determining, by the deviation detection device, a direction of the aggregated horizontal moving speed as the horizontal straight-forward direction of the vehicle.

4. The method according to claim 2, wherein the pre-determined relationship comprises an angle between the horizontal straight-forward direction and the target photographing direction, and the method further comprises:
updating, by the deviation detection device, the angle between the horizontal straight-forward direction and the target photographing direction comprised in the pre-determined relationship to the direction angle on receipt of an instruction for resetting the pre-determined relationship.

5. The method according to any one of claims 1 to 3, wherein after the deviation detection device determines that the actual photographing direction of the image capturing device deviates, the method further comprises:
sending, by the deviation detection device, a prompt message to a user terminal, wherein the prompt message indicates that the actual photographing direction of the image capturing device deviates.

6. The method according to any one of claims 1 to 3, wherein after the deviation detection device determines that the actual photographing direction of the image capturing device deviates, the method further comprises:
correcting, by the deviation detection device, the actual photographing direction of the image capturing device based on the direction angle.

7. The method according to any one of claims 1 to 4, wherein the preset condition comprises at least one of the following conditions that:
the direction angle is greater than a first preset angle threshold;
a component of the direction angle in a horizontal plane is greater than a second preset angle threshold; and
a component of the direction angle in a vertical plane is greater than a third preset angle threshold.

8. The method according to any one of claims 1 to 4, wherein the deviation detection device is a driving recorder, and the image capturing device is an image capturing assembly in the driving recorder.

9. A deviation detection device, comprising a processor and a memory, wherein the memory stores an instruction, and the instruction is executed by the processor to implement the photographing direction deviation detection method according to any one of claims 1 to 8.

10. A computer readable storage medium storing an instruction, wherein the instruction is executed by a processor in a deviation detection device to implement the photographing direction deviation detection method according to any one of claims 1 to 8.

## Patentansprüche

1. Verfahren zur Erkennung einer Abweichung einer Fotografierrichtung, umfassend:
Erhalten, durch eine Abweichungserfassungsvorrichtung, einer horizontalen Beschleunigung einer Bildaufnahmevorrichtung zu jedem einer Vielzahl von Zeitpunkten in einer vorbestimmten Zeitperiode, wobei die horizontale Beschleunigung ein Vektor mit einem Wert und einer Richtung ist, und
Ermitteln, durch die Abweichungserfassungsvorrichtung, einer anfänglichen Bewegungsgeschwindigkeit der Bilderfassungsvorrichtung, wobei die anfängliche Bewegungsgeschwindigkeit ein Vektor mit einem Wert und einer Richtung ist,
wobei die anfängliche Bewegungsgeschwindigkeit eine Bewegungsgeschwindigkeit der Bilderfassungsvorrichtung in einer horizontalen Richtung zu einem Startzeitpunkt des vorbestimmten Zeitraums angibt;
Berechnen, durch die Abweichungserfassungsvorrichtung, einer horizontalen Bewegungsgeschwindigkeit der Bilderfassungsvorrichtung zu jedem der Zeitpunkte in der vorbestimmten Zeitperiode, basierend auf der anfänglichen Bewegungsgeschwindigkeit und der horizontalen Beschleunigung der Bilderfassungsvorrichtung zu jedem der Zeitpunkte;
Einstellen, durch die Abweichungserfassungsvorrichtung, einer Gewichtung für die horizontale Bewegungsgeschwindigkeit der Bilderfassungsvorrichtung zu jedem der Zeitpunkte in der vorbestimmten Zeitperiode durch die Abweichungserfassungsvorrichtung, so dass die Gewichtung in positiver Korrelation mit dem Wert der horizontalen Bewegungsgeschwindigkeit steht, und Aggregieren der horizontalen Bewegungsgeschwindigkeiten der Bilderfassungsvorrichtung zu den Zeitpunkten in der vorbestimmten Zeitperiode auf der Grundlage der eingestellten Gewichte, um eine aggregierte horizontale Bewegungsgeschwindigkeit zu erhalten;
Bestimmen, durch die Abweichungserfassungsvorrichtung, einer horizontalen Geradeausrichtung eines Fahrzeugs auf der Grundlage einer Richtung der aggregierten horizontalen Fahrgeschwindigkeit;
Bestimmen, durch die Abweichungserfassungsvorrichtung, einer Zielfotografierrichtung der Bilderfassungsvorrichtung basierend auf der horizontalen Geradeausrichtung des Fahrzeugs und einer vorbestimmten Beziehung zwischen der horizontalen Geradeausrichtung und der Zielfotografierrichtung; und
Bestimmen, durch die Abweichungserfassungsvorrichtung in einem Fall, dass ein Richtungswinkel eine voreingestellte Bedingung erfüllt, dass eine tatsächliche Aufnahmerichtung der Bilderfassungsvorrichtung abweicht, wobei der Richtungswinkel einen Winkel zwischen der Zielaufnahmerichtung und der tatsächlichen Aufnahmerichtung der Bilderfassungsvorrichtung zu einem Endzeitpunkt der vorbestimmten Zeitperiode anzeigt.

2. Verfahren nach Anspruch 1, wobei die Bilderfassungsvorrichtung fest in einem Fahrzeug angeordnet ist.

3. Verfahren nach Anspruch 2, wobei das Bestimmen, durch die Abweichungserfassungsvorrichtung, einer horizontalen Geradeausrichtung des Fahrzeugs auf der Grundlage der horizontalen Bewegungsgeschwindigkeit der Bilderfassungsvorrichtung zu jedem der Zeitpunkte umfasst:
Bestimmen, durch die Abweichungserfassungsvorrichtung, eines oder mehrerer gültiger Zeitpunkte unter den Zeitpunkten, wobei der gültige Zeitpunkt einen Zeitpunkt angibt, zu dem die horizontale Bewegungsgeschwindigkeit einen Geschwindigkeitswert aufweist, der größer als ein voreingestellter Geschwindigkeitsschwellenwert ist;
Aggregieren, durch die Abweichungserfassungsvorrichtung, der horizontalen Bewegungsgeschwindigkeiten zu den gültigen Zeitpunkten, um eine aggregierte horizontale Bewegungsgeschwindigkeit zu erhalten; und
Bestimmung, durch die Abweichungserfassungsvorrichtung, einer Richtung der aggregierten horizontalen Fahrgeschwindigkeit als horizontale Geradeausrichtung des Fahrzeugs.

4. Verfahren nach Anspruch 2, wobei das vorbestimmte Verhältnis einen Winkel zwischen der horizontalen Geradeausrichtung und der Zielfotografierichtung umfasst, und das Verfahren ferner umfasst:
Aktualisieren, durch die Abweichungserfassungsvorrichtung, des Winkels zwischen der horizontalen Geradeausrichtung und der Zielfotografierrichtung, der in der vorbestimmten Beziehung zum Richtungswinkel enthalten ist, bei Empfang einer Anweisung zum Zurücksetzen der vorbestimmten Beziehung.

5. Verfahren nach einem der Ansprüche 1 bis 3, wobei, nachdem die Abweichungserkennungsvorrichtung festgestellt hat, dass die tatsächliche Aufnahmerichtung der Bilderfassungsvorrichtung abweicht, das Verfahren ferner umfasst:
Senden, durch die Abweichungserfassungsvorrichtung, einer Aufforderungsmeldung an ein Benutzerterminal, wobei die Aufforderungsmeldung anzeigt, dass die tatsächliche Aufnahmerichtung der Bilderfassungsvorrichtung abweicht.

6. Verfahren nach einem der Ansprüche 1 bis 3, wobei, nachdem die Abweichungserkennungsvorrichtung festgestellt hat, dass die tatsächliche Aufnahmerichtung der Bilderfassungsvorrichtung abweicht, das Verfahren ferner umfasst:
Korrigieren, durch die Abweichungserfassungsvorrichtung, der tatsächlichen Aufnahmerichtung der Bilderfassungsvorrichtung auf der Grundlage des Richtungswinkels.

7. Verfahren nach einem der Ansprüche 1 bis 4, wobei die voreingestellte Bedingung mindestens eine der folgenden Bedingungen umfasst::
der Richtungswinkel ist größer als ein erster voreingestellter Winkelschwellenwert;
eine Komponente des Richtungswinkels in einer horizontalen Ebene größer ist als ein zweiter voreingestellter Winkelschwellenwert; und eine Komponente des Richtungswinkels in einer vertikalen Ebene größer ist als ein dritter voreingestellter Winkelschwellenwert.

8. Verfahren nach einem der Ansprüche 1 bis 4, wobei die Abweichungserkennungsvorrichtung ein Fahrtenschreiber ist und die Bilderfassungsvorrichtung eine Bilderfassungsbaugruppe im Fahrtenschreiber ist.

9. Abweichungserkennungsvorrichtung, die einen Prozessor und einen Speicher umfasst, wobei der Speicher einen Befehl speichert und der Befehl von dem Prozessor ausgeführt wird, um das Verfahren zur Erkennung einer Abweichung der Fotografierrichtung nach einem der Ansprüche 1 bis 8 zu implementieren.

10. Computerlesbares Speichermedium, das eine Anweisung speichert, wobei die Anweisung von einem Prozessor in einer Abweichungserkennungsvorrichtung ausgeführt wird, um das Verfahren zur Erkennung einer Abweichung von der Fotografierrichtung nach einem der Ansprüche 1 bis 8 zu implementieren.

## Revendications

1. Procédé de détection de déviation de direction de photographie, comprenant :
l'obtention, par un dispositif de détection de déviation, d'une accélération horizontale d'un dispositif de capture d'image à chacun d'une pluralité d'instants temporels pendant une période temporelle prédéterminée, l'accélération horizontale étant un vecteur ayant une valeur et une direction, et l'obtention, par le dispositif de détection de déviation, d'une vitesse de déplacement initiale du dispositif de capture d'image, la vitesse de déplacement initiale étant un vecteur ayant une valeur et une direction,
et dans lequel la vitesse de déplacement initiale indique une vitesse de déplacement du dispositif de capture d'image dans une direction horizontale à un instant temporel de début de la période temporelle prédéterminée ;
le calcul, par le dispositif de détection de déviation, d'une vitesse de déplacement horizontal du dispositif de capture d'image à chacun des instants temporels pendant la période temporelle prédéterminée sur la base de la vitesse de déplacement initiale et de l'accélération horizontale du dispositif de capture d'image à chacun des instants temporels ;
la définition, par le dispositif de détection de déviation, d'une pondération pour la vitesse de déplacement horizontal du dispositif de capture d'image à chacun des instants temporels pendant la période temporelle prédéterminée, de sorte que la pondération soit en corrélation positive avec la valeur de la vitesse de déplacement horizontal, et l'agrégation, par le dispositif de détection de déviation, des vitesses de déplacement horizontal du dispositif de capture d'image aux instants temporels pendant la période temporelle prédéterminée sur la base des pondérations définies pour obtenir une vitesse de déplacement horizontal agrégée ;
la détermination, par le dispositif de détection de déviation, d'une direction vers l'avant horizontale d'un véhicule sur la base d'une direction de la vitesse de déplacement horizontal agrégée ;
la détermination, par le dispositif de détection de déviation, d'une direction de photographie cible du dispositif de capture d'image sur la base de la direction vers l'avant horizontale du véhicule et d'une relation prédéterminée entre la direction vers l'avant horizontale et la direction de photographie cible ; et
la détermination, par le dispositif de détection de déviation dans le cas dans lequel un angle de direction satisfait une condition prédéfinie, qu'une direction de photographie réelle du dispositif de capture d'image dévie,
et dans lequel l'angle de direction indique un angle entre la direction de photographie cible et la direction de photographie réelle du dispositif de capture d'image à un instant temporel de fin de la période temporelle prédéterminée.

2. Procédé selon la revendication 1, dans lequel le dispositif de capture d'image est agencé de manière fixe dans un véhicule.

3. Procédé selon la revendication 2, dans lequel la détermination, par le dispositif de détection de déviation, d'une direction vers l'avant horizontale du véhicule sur la base de la vitesse de déplacement horizontal du dispositif de capture d'image à chacun des instants temporels comprend :
la détermination, par le dispositif de détection de déviation, d'un ou de plusieurs instants temporels valides parmi les instants temporels,
et dans lequel l'instant temporel valide indique un instant temporel auquel la vitesse de déplacement horizontal possède une valeur de vitesse supérieure à un seuil de vitesse prédéfini ;
l'agrégation, par le dispositif de détection de déviation, des vitesses de déplacement horizontal aux instants temporels valides, pour obtenir une vitesse de déplacement horizontal agrégée ; et
la détermination, par le dispositif de détection de déviation, d'une direction de la vitesse de déplacement horizontal agrégée comme étant la direction vers l'avant horizontale du véhicule.

4. Procédé selon la revendication 2, dans lequel la relation prédéterminée comprend un angle entre la direction vers l'avant horizontale et la direction de photographie cible, et le procédé comprend en outre :
la mise à jour, par le dispositif de détection de déviation, de l'angle entre la direction vers l'avant horizontale et la direction de photographie de la cible compris dans la relation prédéterminée vers l'angle de direction à réception d'une instruction pour la réinitialisation de la relation prédéterminée.

5. Procédé selon l'une quelconque des revendications 1 à 3, dans lequel après que le dispositif de détection de déviation détermine que la direction de photographie réelle du dispositif de capture d'image dévie, le procédé comprend en outre :
l'envoi, par le dispositif de détection de déviation, d'un message d'invite à un terminal utilisateur,
et dans lequel le message d'invite indique que la direction de photographie réelle du dispositif de capture d'image dévie.

6. Procédé selon l'une quelconque des revendications 1 à 3, dans lequel après que le dispositif de détection de déviation détermine que la direction de photographie réelle du dispositif de capture d'image dévie, le procédé comprend en outre :
la correction, par le dispositif de détection de déviation, de la direction de photographie réelle du dispositif de capture d'image sur la base de l'angle de direction.

7. Procédé selon l'une quelconque des revendications 1 à 4, dans lequel la condition prédéfinie comprend au moins l'une des conditions suivantes selon lesquelles :
l'angle de direction est supérieur à un premier seuil d'angle prédéfini ;
une composante de l'angle de direction dans un plan horizontal est supérieure à un deuxième seuil d'angle prédéfini ; et
une composante de l'angle de direction dans un plan vertical est supérieure à un troisième seuil d'angle prédéfini.

8. Procédé selon l'une quelconque des revendications 1 à 4, dans lequel le dispositif de détection de déviation est un enregistreur de conduite, et le dispositif de capture d'image est un assemblage destiné à la capture d'image dans l'enregistreur de conduite.

9. Dispositif de détection de déviation, comprenant un processeur et une mémoire, dans lequel la mémoire stocke une instruction, et l'instruction est exécutée par le processeur pour mettre en oeuvre le procédé de détection de déviation de direction de photographie selon l'une quelconque des revendications 1 à 8.

10. Support de stockage lisible par ordinateur stockant une instruction, dans lequel l'instruction est exécutée par un processeur dans un dispositif de détection de déviation pour mettre en oeuvre le procédé de détection de déviation de direction de photographie selon l'une quelconque des revendications 1 à 8.
